# EUROPEAN PATENT APPLICATION

(11) **EP 1 876 383 A2**
(43) Date of publication of application: **09.01.2008**
(21) Application number: 06126780.3
(22) Date of filing: 21.12.2006
(51) Int. Cl.: F16P 3/14

(54) **Safety barrier**

(30) Priority: 06.07.2006 IT MO20060219
(71) Applicant: Datasensor S.p.A., 40050 Monte San Pietro (BO) (IT)
(72) Inventor: Lorenzoni, Enrico, 40069 Zola Predosa (BO) (IT); Bruno, Andrea, Bologna (IT)
(74) Representative: Luppi, Luigi

(57) **Abstract**

A safety barrier for controlling a passage zone (20) comprises safety sensor means (8, 15) for detecting a body moved along a movement plane and passing through said passage zone (20) and muting sensor means (23, 23c; 23d) for temporarily disabling said safety sensor means (8, 15) when a body authorised (21) passes through said passage zone (20), said muting sensor means (23, 23c; 23d) being arranged transversely to said movement plane. The muting sensor means (23, 23c) can comprise dimensional sensor means for detecting a dimension of said body.

## Description

The invention relates to a safety barrier, in particular for industrial use, used for preventing undesired access to hazard zones.

To prevent an operator from accidentally entering hazard zones in which, for example, a machine tool is operative, safety barriers are known that are positioned near access gates to the hazard zones.

For example, EP 1329662 discloses a photoelectric barrier provided with safety sensors comprising a plurality of light emitting diodes (LED) mounted on a first bar situated on an access gate side giving access to the hazard zone. Each of the light emitting diodes generates a beam of light that is detected by a corresponding photodiode mounted on a second bar situated on the other side of the access gate giving access to the hazard zone. A computing unit is connected to the photodiodes and receives a signal therefrom. If an operator tries to pass through the first and second bar he intercepts the beams emitted by the light emitting diodes. As a result, the signal generated and received by the photodiodes and received by the computing unit is modified. The computing unit, detecting that the signal received thereby has been modified, generates an alarm signal.

The safety barrier disclosed in EP 1329662 further comprises a plurality of muting sensors for disabling momentaneously the safety sensors when the access gate is crossed by an object that is permitted to enter the hazard zone, such as for example a pallet moved by a conveyor belt along a movement plane in an advancing direction. The muting sensors comprise one or more pairs of light emitters mounted on a first bracket connected to the first bar. One or more pairs of light receivers, which are mounted on a second bracket connected to the second bar, receive the light beams emitted by the light emitters and generate output signals that are sent to the computing unit. The first bracket and the second bracket extend perpendicularly to the first bar and to the second bar, i.e. parallel to the movement plane. Thus the muting sensors are arranged in succession along the advancing direction, immediately above the conveyor belt and parallel to the movement plane.

If a pallet crosses the photoelectric safety barrier, the light beams emitted by the light emitters are interrupted according to a preset sequence. This preset sequence is known to the computing unit. The computing unit recognises that an authorised object is advancing and temporarily disables the safety sensors, so that an alarm signal is not generated.

On the other hand, if an unauthorised object, for example an operator, tries to enter the hazard zone, the beams of light emitted by the light emitters are interrupted according to a sequence that is different from the predetermined one. In this case, the muting function is not activated and the computing unit generates an alarm signal.

A drawback of known safety barriers is that the computing unit does not always recognise the objects authorised to pass through the barrier.

A pallet approaching the safety sensors may in fact not break the beams emitted by the light emitters according to the preset sequence. This may be due to the fact that the pallet is damaged or has a shape and dimensions that are different from the standard shape and dimensions for which the safety barrier was designed.

If, for example, the pallet has a base on which the objects are rested placed at a distance from the conveyor belt that is greater than the nominal value or if, due to previously received blows, portions of the base of the pallet have become detached, the muting sensors may not recognise that an authorised object is entering the hazard zone.

In this case, the computing unit does not enable the pallet to enter the hazard zone and generates an alarm signal that in some applications may stop the machine tool as a precaution. An unjustified production loss thus occurs.

An object of the invention is to improve known safety barriers arranged for blocking the passage of unauthorised bodies through the passage zone that bounds a hazard zone, in which, for example, a machine tool is active.

A further object is to improve the reliability of the safety barriers and in particular the acquisition of the muting signals, in such a way that the safety barrier does not stop a production cycle due to errors in recognising the bodies authorised to cross the passage zone.

In a first aspect of the invention, there is provided a safety barrier for controlling a passage zone, said safety barrier comprising safety sensor means for detecting a body moved along a movement plane and passing through said passage zone and muting sensor means for temporarily disabling said safety sensor means when an authorised body passes through said passage zone, characterised in that said muting sensor means is arranged transversely to said movement plane.

Owing to the first aspect of the invention, it is possible to obtain a safety barrier in which the muting sensor means has an improved capability to recognise bodies authorised to pass through the passage zone.

In fact, the muting sensor means is able to control a region having significant dimension that is transverse to the movement plane, which enables the authorised bodies to be recognised, for example the pallets, even when the latter are damaged or have dimensions other than the standard dimensions.

In a second aspect of the invention, there is provided a safety barrier for controlling a passage zone, said safety barrier comprising safety sensor means for detecting a body moved along a movement plane and passing through said passage zone and muting sensor means for temporarily disabling said safety sensor means when an authorised body passes through said passage zone, characterised in that said muting sensor means comprises dimensional sensor means for detecting a dimension of said body.

Owing to the second aspect of the invention, a safety barrier is obtained having an improved capability to recognise the bodies authorised to pass through the passage zone. The dimensional sensor means in fact enables a dimensions of the bodies to be detected that approach the safety sensor means, which dimension can be used as a test parameter for determining which bodies passing through the safety barrier are bodies authorised to pass through the passage zone.

The invention can be better understood and implemented with reference to the attached drawings, which illustrate some embodiments thereof by way of non-limiting example, in which:
Figure 1 is a schematic perspective view of a safety barrier equipped with discrete emission muting sensors;
Figure 2 is a side view of a portion of the safety barrier in Figure 1;
Figure 3 is a front view that shows a plurality of muting sensors with which the safety barrier in Figure 1 is equipped;
Figure 4 is a side view like the one in Figure 2, showing a further embodiment of the safety barrier;
Figure 5 is a schematic perspective view of a safety barrier equipped with continuous-emission muting sensors;
Figure 6 is a side view of a portion of a further embodiment of a safety barrier;
Figure 7 is a front view of a still further embodiment of a safety barrier.

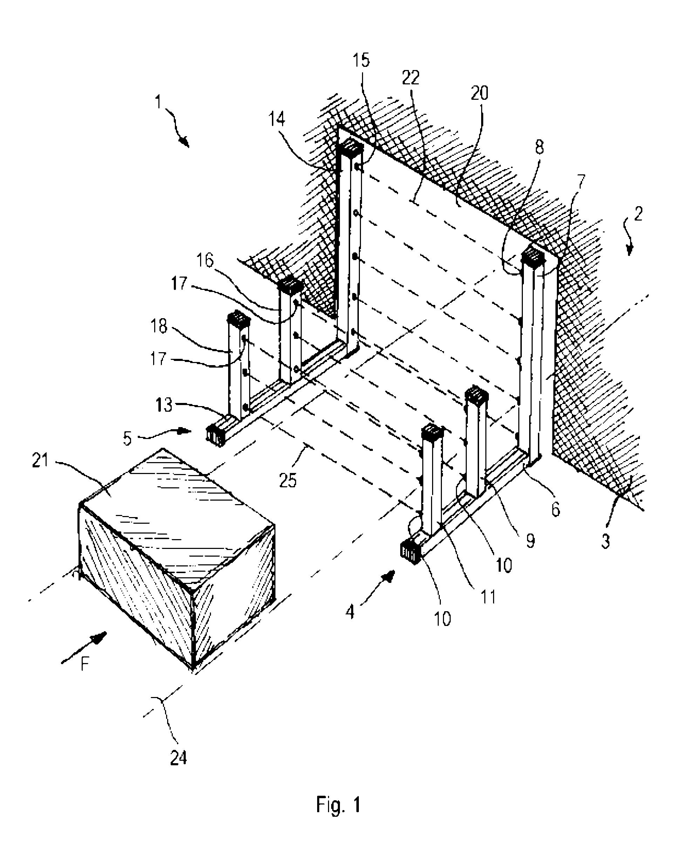

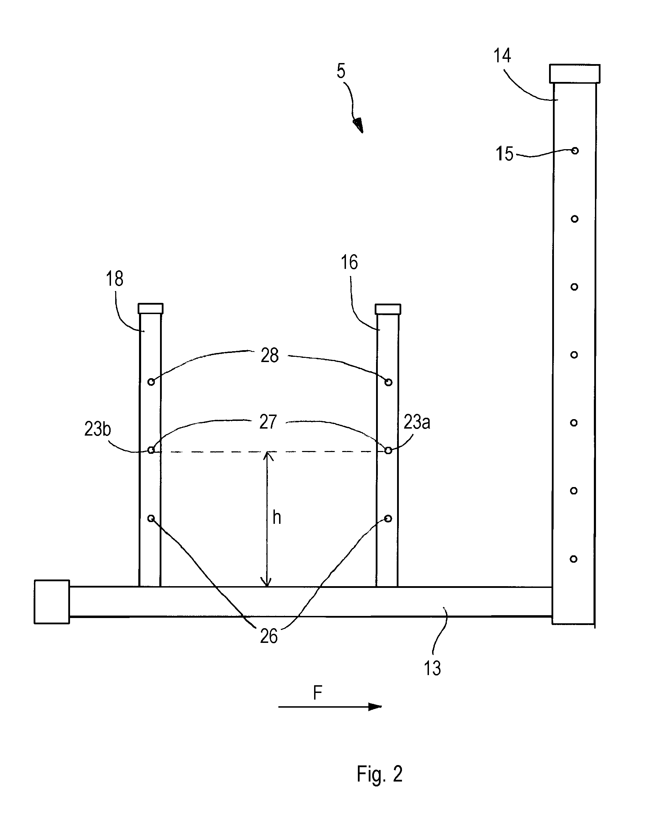

With reference to Figures 1 and 2, there is shown a safety barrier 1, in particular a photoelectric type barrier, which can be used to prevent undesired access to a hazard zone 2 delimited by separating means 3, for example a wire net. The hazard zone 2 can be an area in which one or more automatic devices, for example machine tools, are working. These automatic devices can jeopardise the safety of an operator who enters the hazard zone 2 without the appropriate precautions.

The safety barrier 1 comprises supporting means 4 and further supporting means 5 arranged on opposite sides of a passage zone 20 obtained in the separating means 3. By passing through the passage zone 20 it is possible to enter the hazard zone 2 or exit it. In particular, the passage zone 20 can be used to convey pallets 21 full of pieces to be subjected to machining on the machine tool to the hazard zone 2.

The pallets 21 are conveyed inside the hazard zone 2 along a movement plane defined by a conveyor belt 24 shown only schematically in Figure 1. The conveyor belt 24 transports the pallet 21 in an advancing direction F.

The supporting means 4 and the further supporting means 5 comprise respectively a bar 7 and a further bar 14 that support a plurality of safety sensors. The latter comprise a plurality of light emitting diodes 8 (LED) mounted on the bar 7 and interacting with respective photodiodes 15 mounted on the further bar 14. The light emitting diodes 8 emit respective light beams 22 that are received by the photodiodes 15. By the term "light beams", in this context not only visible electromagnetic radiation but also non visible electromagnetic radiation for example infrared electromagnetic radiation is intended.

The bar 7 and the further bar 14 extend transversely to the movement plane defined by the conveyor belt 24 and, in particular, are substantially perpendicular to this plane. The light beams 22 lie in a flat region defined by the bar 7 and by the further bar 14. In the case shown in Figures 1 and 2, the movement plane defined by the conveyor belt 24 is substantially horizontal, whilst the bar 7 and the further bar 14 extend in a vertical direction.

To the bar 7 there is fixed a support 6 to which a first column 9 and a second column 11 are fixed. Similarly, on the further bar 14 there is mounted a further support 13 to which a further first column 16 and a further second column 18 are fitted.

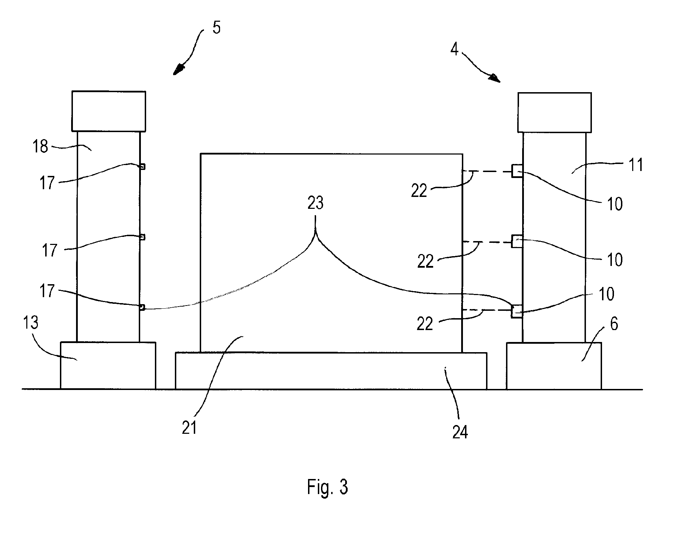

The first column 9, the second column 11, the further first column 16 and the further second column 18 support a plurality of muting sensors 23 clearer in Figure 3 and each comprising a light emitter 10 and a corresponding light receiver 17. The light emitters 10 are mounted on the first column 9 and on the second column 11 and emit discrete light beams 25 directed to the respective light receivers 17 mounted on the further first column 16 and on the further second column 18.

It should be noted that in the expression "light beams" the term "light" is to be taken to refer to any type of electromagnetic radiation, not necessarily visible electromagnetic radiation.

The first column 9, the second column 11, the further first column 16 and the further second column 18 extend transversely to the movement plane defined by the conveyor belt 24, i.e. they have a different orientation from this plane, and can, for example, be substantially perpendicular to said movement plane. In this way, the discrete light beams 25 generated by the light emitters 10 mounted on the first column 9 lie on a first plane that is substantially perpendicular to the movement plane. Similarly, the discrete light beams 25 generated by the light emitters 10 mounted on the second column 11 lie on a second plane substantially perpendicular to the movement plane.

In the example in Figures 1 and 2, the first column 9, the second column 11, the further first column 16 and the further second column 18 are substantially vertical. The support 6 and the further support 13 are on the other hand substantially horizontal.

The height position of the support 6 and of the further support 13 respectively along the bar 7 and the further bar 14 can be adjusted by adjusting devices that are not shown.

The muting sensors 23 are mounted in such a way as to be arranged at different heights with respect to the movement plane defined by the conveyor belt 24. In the example that we are discussing, to each sensor 23a supported by the first column 9 and by the further first column 16 at a height h a sensor 23b corresponds that is supported at the same height h by the second column 11 and by the further second column 18, as shown in Figures 2 and 3.

In particular, the safety barrier 1 shown in Figures 1 to 3 comprises a lower pair 26 of muting sensors 23 positioned near the conveyor belt 24, an intermediate pair 27 of muting sensors 23 arranged above the lower pair 26, and an upper pair 28 of muting sensors 23 arranged above the intermediate pair 27.

The muting sensors can however be positioned in any position deemed to be appropriate by the user.

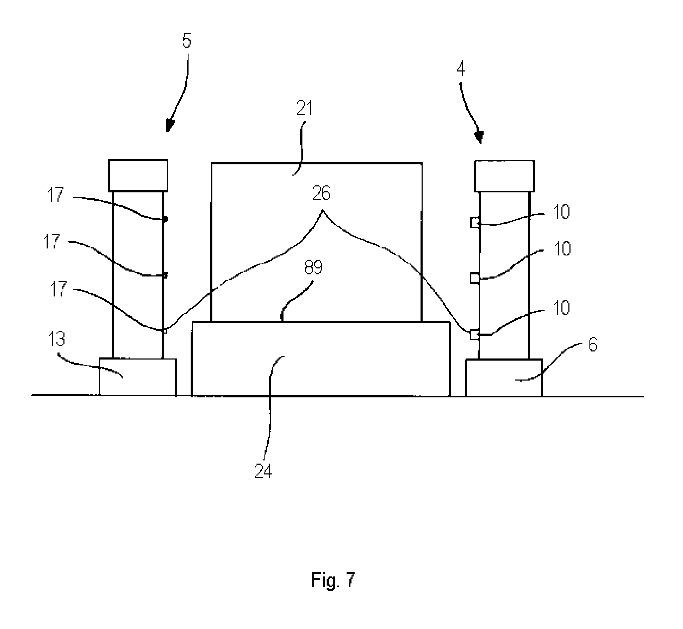

For example, as shown in Figure 7, the lower pair 26, of which, in Figure 7, a sole muting sensor is visible, can be arranged at a height below that of an upper surface 89 of the conveyor belt 24.

The safety barrier 1 further comprises a computing unit connected to the photodiodes 15 and to the light receivers 17.

During operation, if a non-transparent body, for example a pallet 21 or an operator, intercepts a light beam 22 emitted by one of the light emitting diodes 8, a variation is generated in the signal that is sent from the photodiodes 15 to the computing unit. The latter, by detecting that the signal has changed, realises that the body is passing through the passage zone 20 and generates an alarm signal. The alarm signal deactivates the automatic devices inside the hazard zone 2.

The light emitting diodes 8 and the photodiodes 15 thus perform a safety operation inside the safety barrier 1.

Before interacting with the light beams 22, the bodies that pass through the safety barrier 1 intercept the light beams 25 emitted by the light emitters 10, generating a variation in the signal that is sent to the computing unit by the light receivers 17. The latter perform a muting function on the safety barrier 1.

The change to the signal generated by the light receivers 17, when a body moves through the safety barrier 1, is analysed by the computing unit to recognise the body that is passing through the barrier. If the body that passes through the barrier is a body authorised to enter the hazard zone 2, the computing unit activates the muting function, i.e. temporarily disables the safety function and the body can enter the hazard zone 2 without an alarm signal being generated.

If the body that passes through the safety barrier 1 is not a body authorised to enter the hazard zone 2, the computing unit does not activate the muting function, and the safety function remains activated. If the unauthorised body continues to advance as far as intercepting the light beams 22 emitted by the light emitting diodes 8, the computing unit generates an alarm signal.

The computing unit recognises that an authorised body is passing through the safety barrier 1 when the light beams 25 emitted by two light emitters 10 arranged in succession along the advancing direction F are interrupted according to a preset sequence.

In order to process the signals coming from the muting sensors 23, the computing unit can use an "or" logic that authorises a body to pass through the safety barrier 1 even when only one of the detected sequences corresponds to the preset sequence.

In this way, the safety barrier 1 that has just be disclosed is able to recognise even damaged pallets 21, or pallets having shapes or dimensions that are to certain extent different from standard pallets, as bodies authorised to enter the hazard zone 2.

Let it be supposed, for example, that a region of the pallet 21 is damaged near the conveyor belt 24. In this case, the light beams 25 emitted by the light emitters 10 included in the lower pair 26 of muting sensors 23 are interrupted according to a sequence that is different from the preset one. Nevertheless, the light beams 25 emitted by the light emitters 10 included in the intermediate pair 27 and in the upper pair 28 of muting sensors 23 are interrupted according to the preset sequence. The computing unit thus recognised that an authorised body is approaching the passage zone 20 and temporarily disables the safety sensors.

Similarly, a pallet 21 may not be recognised as a body authorised to pass through the passage zone 20 by the muting sensors 23 of the lower pair 26 because the pallet 21 is provided with a support base that has different shapes or dimensions from those of the standard pallets. In this case, the muting sensors 23 of the intermediate pair 27 and of the upper pair 28, if activated according to the preset sequence, can recognise that the pallet 21 is an authorised body and prevent the alarm signal from being generated.

The quantity of data at disposal of the computing unit depends on the number of muting sensors 23.

In the example in Figures 1 to 3, for sake of clarity, only three pairs of muting sensors 23 are shown. Nevertheless, it is possible to mount onto the first column 9 and onto the further first column 16, and onto the second column 11 and onto the further second column 18 as well, an arbitrary number n of muting sensors 23 arranged in succession along the aforesaid columns.

By increasing the number of muting sensors 23 arranged in a vertical direction, the precision and reliability of the safety barrier 1 also increases.

If a suitable number of muting sensors 23 is provided, the latter act as dimensional sensors, i.e. are able to detect at least a dimension of the body that passes through the safety barrier 1.

For example, n light emitters 10 mounted on the first column 9 and n corresponding light receivers 17 mounted on the further first column 16 can define a first dimensional sensor that detects a dimension, for example the height of the bodies that approach the passage zone 20. Similarly, n light emitters 10 mounted on the second column 11 and n corresponding light receivers 17 mounted on the further second column 18 define a second dimensional sensor.

The dimensional sensors enable the precision and reliability of the safety barrier 1 to be increased considerably inasmuch as it clearly increases the quantity of data that is made available to the computing unit and thus improves the capability of recognising the pallets 21 authorised to enter the hazard zone 2.

In order to process the signals coming from the dimensional sensors, the computing unit can use, instead of the "or" logic, which is more suitable for processing the data coming from a small number of muting sensors 23, a more complex logic in which the number of light beams 25 that the body intercepts at any instant is taken into consideration.

The number of light beams 25 intercepted by a pallet 21 that passes through the safety barrier and the logic used by the computing unit to process the data provided by the dimensional sensors can be used to measure a dimension of the pallet 21 in the direction defined by the first column 9, by the further first column 16, or by the second column 11 and by the further second column 18.

The detected dimension can possible be compared with a corresponding dimension of the pallets authorised to pass through the safety barrier and thus be used as a further datum for recognising the pallets 21 that approach the safety barrier.

This can be very useful for recognising different types of pallet 21 having at least a similar dimension, for example the height of the support base.

The dimensional sensors are also useful if the moved pallets 21 are provided with regions that are unlikely to be damaged, that remain undamaged even after the pallets 21 have been used for a long time and have undergone many blows. In this case the dimensional sensors enable a dimension of the regions that are unlikely to be damaged to be measured to recognise the pallets 21 authorised to pass through.

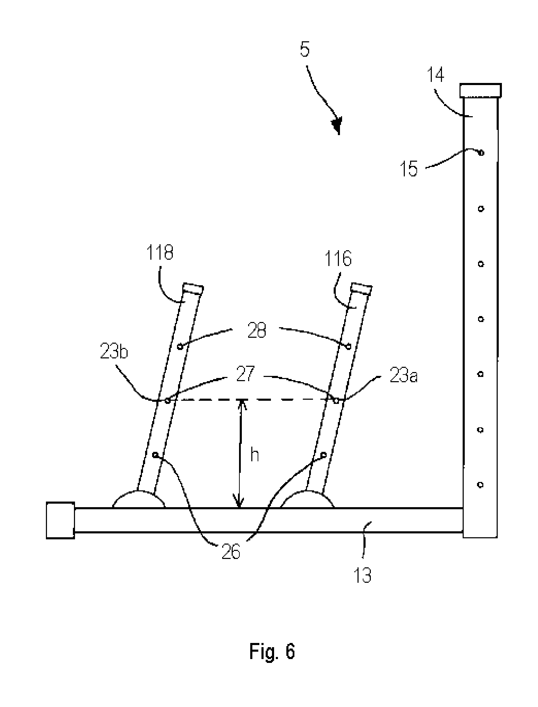

In an alternative embodiment, the dimensional sensors are mounted on supporting structures with an elongated shape, for example columns similar to the columns disclosed hitherto, arranged in a direction that is oblique to the movement plane or even extending substantially parallel to such a plane. For example, in Figure 6 there is visible a further first column 116 and a further second column 118, both oblique with respect to the movement plane, supporting at least three pairs of muting sensors 23 and having a structure and functions similar to those of the columns disclosed previously.

The columns on which the muting sensors are mounted can be orientatable with respect to the support 6 and to the further support 13, so as to be positionable, depending on the needs of the user, in any direction variable between the direction parallel to the movement plane and the direction perpendicular to that plane.

The support structures that support the dimensional sensors may also comprise an arm fixed to the bar 7 and a further arm fixed to the further bar 14, the arm and the further arm being arranged substantially parallel to the advancing direction F of the bodies positioned on the conveyor belt. On the arm fixed to the bar 7 and on the further arm fixed to the further bar 14 there are mounted respectively a plurality of light emitters 10 and corresponding light receivers 17. It is possible to provide a number of light emitters 10, and a corresponding number of light receivers 17, greater than four, for example ten in number.

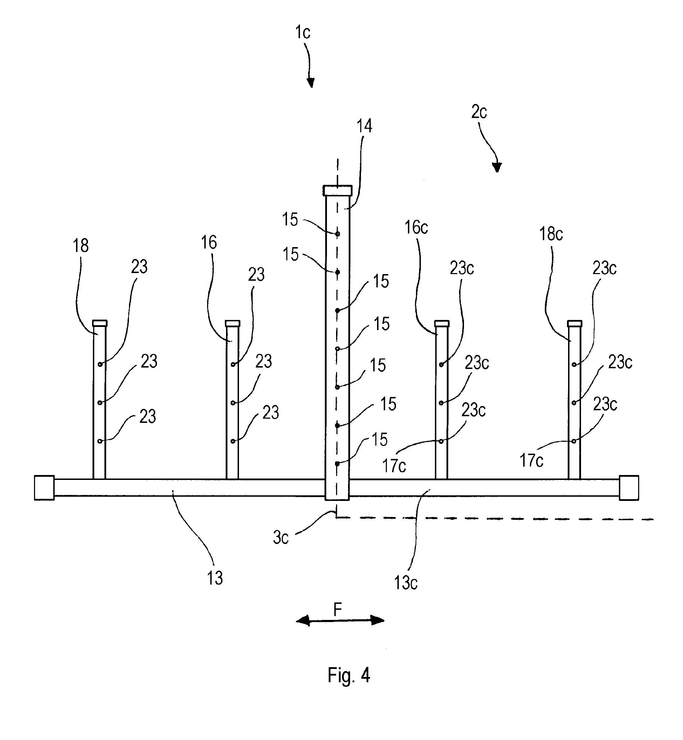

Figure 4 shows a side view of a further embodiment of a safety barrier according to the invention. According to this further embodiment, there is provided a bilateral safety barrier 1c that, in addition to controlling the entry into a zone 2c bounded by separating means 3c, also enables the outlet from the zone 2c to be controlled.

The bilateral safety barrier 2c is made by positioning further muting sensors 23c also inside the zone 2c at which it is desired to adjust the access, with the same methods described above and shown in Figures 1 and 2 for the safety barrier 1.

For this purpose, a support element that is not shown and a further support element 13c are provided that extend along the advancing direction F symmetrically to the support 6 and to the further support 13 with respect to the plane defined by the bar 7 and by the further bar 14. To the support element there are fixed a third column and a fourth column that are not shown, that are arranged perpendicularly to the movement plane and supporting a plurality of light emitters. Similarly, to the further support element 13c there are fixed a further a third column 16c and a further fourth column 18c, arranged perpendicular to the movement plane and supporting a plurality of light receivers 17c. The third column, the fourth column, the further third column 16c and the further fourth column 18c can be substantially symmetrical to the first column 9, to the second column 11, to the further first column 16 and to the further second column 18 with respect to the plane defined by the bar 7 and by the further bar 14.

The operation of the bilateral safety barrier 1c is completely similar to that of the safety barrier 1 shown in Figures 1 to 3 and will not be described again in detail. It should merely be observed that the muting sensors 23 enable the safety sensors to be disabled temporarily when an authorised body enters the zone 2c, whilst the further muting sensors 23c enable the safety sensors to be disabled temporarily when an authorised body, for example a pallet containing already machined pieces, is leaving the zone 2c.

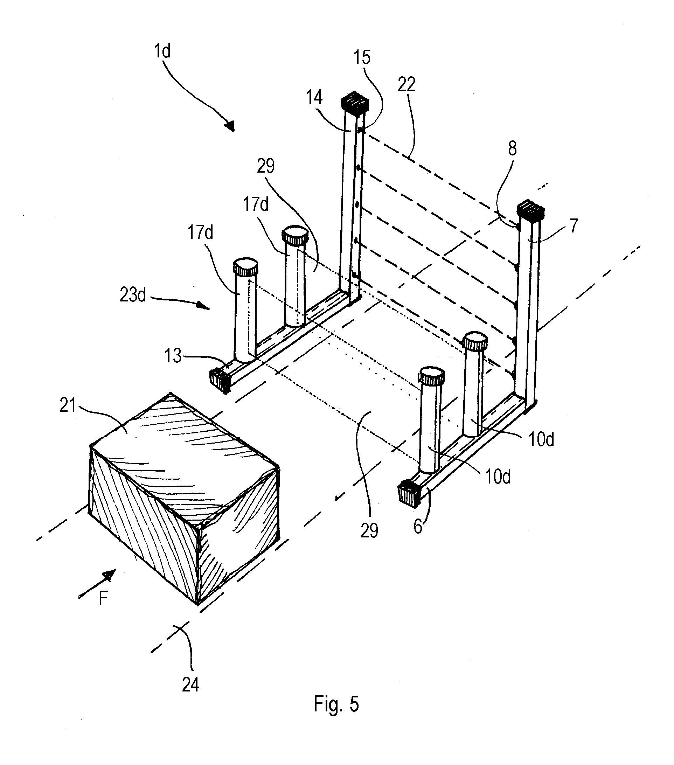

Figure 5 shows a safety barrier 1d according to a still further embodiment, in which continuous muting sensors 23d are used, each of which comprises a continuous source 10d interacting with a respective continuous receiver 17d.

In particular, two continuous sources 10d are provided that are supported by the support 6 and face two continuous receivers 17d supported by the further support 13. Both the continuous sources 10d and the continuous receivers 17d have an elongated shape and extend transversely to the movement plane defined by the conveyor belt 24, for example perpendicularly to this plane.

Each continuous source 10d emits electromagnetic radiation along a continuous line and not only in a dotted region, as occurred for the light emitters 10. Similarly, each continuous receiver 17d is able to receive the electromagnetic radiation along a continuous reception line. In this way, each pair formed by a continuous source 10d and by a continuous receiver 17d enables all the points of a rectangular zone 29 to be monitored, which increases the precisions and reliability of the safety barrier 1d with respect to the case in which discrete muting sensors are used.

In an alternative embodiment that is not shown, the continuous sources and the continuous receivers can be mounted on both sides of a passage zone, so as to obtain a bilateral safety barrier that is similar to that shown in Figure 4.

In another alternative embodiment that is not shown, the light emitting diodes 8 and the photodiodes 15 can be replaced by respective continuous emitters and continuous receivers.

In an embodiment that is not shown, it is possible to use reflecting devices mounted on the further supporting means 5 in a position facing the light emitters 10 and 10c, and/or the continuous sources 10d and/or the light emitting diodes 8. The reflecting devices interact with corresponding receiving devices mounted on the supporting means 4. In this embodiment, all the devices that require an electric supply and connections to the computing unit (i.e. the light emitters 10, 10c, the continuous sources 10d, the light emitting diodes 8 and the receiving devices) are mounted on the supporting means 4 that define an active part of the safety barrier.

The further supporting means 5, on which the reflecting devices are mounted, defines on the other hand a passive part of the safety barrier, which dos not require electric cabling. This enables the mounting and the installation of the safety barrier to be facilitated and the dimensions thereof to be reduced significantly.

Even if in the illustrated embodiments muting sensors have been shown that emit light beams lying on only two vertical planes positioned on the same side of the passage zone 20, it is possible to use muting sensors that emit light beams on more than two (for example four) vertical planes. For example, in the embodiment in Figures 1 to 3 it is possible to use light emitters mounted on a number of columns greater than two, whilst in the embodiment in Figure 5 it is possible to use more than two continuous sources.

Although in the preceding description reference was always made to pallets, the bodies authorised to enter the hazard zone 2, or exit it, may be different from pallets and comprise, for example, AGV carriages. In this case the movement plane is not defined by the conveyor belt that transports the pallet, but by the surface on which the AGV carriages are movable.

## Claims

1. Safety barrier for controlling a passage zone (20), said safety barrier (1) comprising safety sensor means (8, 15) for detecting a body moved along a movement plane and passing through said passage zone (20) and muting sensor means (23, 23c; 23d) for temporarily disabling said safety sensor means (8, 15) when a body authorised (21) passes through said passage zone (20), **characterised in that** said muting sensor means (23, 23c; 23d) is arranged transversely to said movement plane.

2. Safety barrier according to claim 1, wherein said muting sensor means (23, 23c; 23d) is arranged substantially perpendicularly to said movement plane.

3. Safety barrier according to claim 1 or 2, wherein said safety sensor means (5, 8) is positioned in such a way as to detect the passage of said body through a plane and said muting sensor means (23, 23c; 23d) is positioned in such a way as to detect the passage of said body through respective planes substantially parallel to said plane.

4. Safety barrier according to any preceding claim, wherein said muting sensor means (23, 23c; 23d) comprises dimensional sensor means suitable for detecting a dimension of said body (21).

5. Safety barrier according to any preceding claim, wherein said muting sensor means (23, 23c; 23d) comprises emitting means (10; 10d) for emitting electromagnetic radiation and receiving means (17, 17c; 17d) for receiving said electromagnetic radiation.

6. Safety barrier according to claim 5, wherein said emitting means (10; 10d) comprises first emitting means positioned in a first elongated region and second emitting means positioned in a second elongated region.

7. Safety barrier according to claim 6, wherein said first elongated region and said second elongated region are arranged in sequence in an advancing direction (F) along which said body is movable for approaching said passage zone (20).

8. Safety barrier according to claim 6 or 7, wherein said first elongated region and said second elongated region extend in a direction transverse to said movement plane.

9. Safety barrier according to any one of claims 6 to 8, wherein said receiving means (17, 17c; 17d) comprises first receiving means positioned in a further first elongated region and second receiving means positioned in a further second elongated region.

10. Safety barrier according to claim 9, wherein said further first elongated region faces said first elongated region and said further second elongated region faces said second elongated region.

11. Safety barrier according to any one of claims 5 to 10, wherein said muting sensor means (23, 23c; 23d) comprises a plurality of discrete sensors (23, 23c) emitting electromagnetic radiation.

12. Safety barrier according to claim 11, as appended to any one of claims 6 to 10, wherein said first emitting means comprises a first plurality of emitters (10) mounted on a first column (9) arranged in said first elongated region and said second emitting means comprises a second plurality of emitters (10) mounted on a second column (11) arranged in said second elongated region.

13. Safety barrier according to claim 12, as claim 11 is appended to claim 9 or 10, wherein said first receiving means comprises a first plurality of receivers (17) mounted on a further first column (16) arranged in said further first elongated region and said second receiving means comprises a second plurality of receivers (17) mounted on a further second column (18) arranged in said further second elongated region.

14. Safety barrier according to any one of claims 5 to 10, wherein said muting sensor means (23d) comprises continuous sensors emitting electromagnetic radiation.

15. Safety barrier according to claim 14, as appended to any one of claims 6 to 10, wherein said first emitting means comprises a first electromagnetic radiation elongated source (10d) arranged in said first elongated region and said second emitting means comprises a second electromagnetic radiation elongated source (10d) arranged in said second elongated region.

16. Safety barrier according to claim 15, as claim 14 is appended to claim 9 or 10, wherein said first receiving means comprises a first elongated receiver (17d) of said electromagnetic radiation arranged in said further first elongated region and said second receiving means comprises a second elongated receiver (17d) of said electromagnetic radiation arranged in said further second elongated region.

17. Safety barrier according to any one of claims 5 to 16, wherein said muting sensor means (23, 23c; 23d) comprises reflecting means for reflecting the electromagnetic radiation emitted by said emitting means (10; 10d) and convey them to said receiving means (17, 17c; 17d).

18. Safety barrier according to claim 17, wherein said emitting means (10; 10d) and said receiving means (17, 17c; 17d) are mounted on supporting means (4) facing further supporting means (5) on which are mounted said reflecting means.

19. Safety barrier according to any previous claim, wherein said safety sensor means (8, 15) comprises an emission system (8) for emitting at least a beam (22) of electromagnetic radiation and a reception system (15) for receiving said at least a beam (22).

20. Safety barrier according to claim 19, wherein said emission system (8) is mounted on a bar (7) and said reception system (15) is mounted on a further bar (14), said passage zone (20) being defined between said bar (7) and said further bar (14).

21. Safety barrier according to claim 19, wherein said safety sensor means (8, 15) comprises a reflecting system for reflecting said at least a beam (22) from said emission system (8) to said reception system (15).

22. Safety barrier according to claim 21, as claim 19 is appended to claim 18, wherein said emission system (8) and said reception system (15) are mounted on said supporting means (4), said reflecting system being mounted on said further supporting means (5).

23. Safety barrier according to any preceding claim, wherein said muting sensor means (23, 23c; 23d) comprises first muting sensor means (23; 23d) arranged on a side of said passage zone (20).

24. Safety barrier according to claim 23, wherein said muting sensor means (23, 23c; 23d) comprises second muting sensor means (23c) arranged on a further side of said passage zone (20), said further side being opposite said side.

25. Safety barrier for controlling a passage zone (20), said safety barrier (1) comprising safety sensor means (8, 15) for detecting a body moved along a movement plane and passing through said passage zone (20) and muting sensor means (23, 23c) for temporarily disabling said safety sensor means (8, 15) when a body authorised (21) passes through said passage zone (20), **characterised in that** said muting sensor means (23, 23c) comprises dimensional sensor means for detecting a dimension of said body.

26. Safety barrier according to claim 25, wherein said dimensional sensor means is arranged substantially parallel to said movement plane.

27. Safety barrier according to claim 25 or 26, wherein said dimensional sensor means is arranged substantially parallel to an advancing direction (F) along which said body is movable for approaching said passage zone (20).

28. Safety barrier according to any one of claims 25 to 27, wherein said dimensional sensor means comprises emitting means (10, 10c) for emitting electromagnetic radiation and receiving means (17, 17c) for receiving said electromagnetic radiation.

29. Safety barrier according to claim 28, wherein said emitting means (10, 10c) are mounted on first supporting means (9, 11) e said receiving means (17, 17c) are mounted on second supporting means (16, 18, 16c, 18c).

30. Safety barrier according to claim 29, wherein said first supporting means (9, 11) faces said second supporting means (16, 18, 16c, 18c).

31. Safety barrier according to any one of claims 25 to 30, wherein said dimensional sensor means comprises first dimensional sensor means arranged on a side of said passage zone (20).

32. Safety barrier according to claim 31, wherein said dimensional sensor means comprises second dimensional sensor means arranged on a further side of said passage zone (20), said further side being opposite said side.

33. Safety barrier according to any one of claims 25 to 32, wherein said dimensional sensor means comprises more than four electromagnetic radiation discrete emitters.
